# EUROPEAN PATENT APPLICATION

(11) **EP 4 797 221 A1**
(43) Date of publication of application: **26.08.2026**
(21) Application number: 26157961.9
(22) Date of filing: 11.02.2026
(51) Int. Cl.: G06V 10/82, G06V 20/64

(54) **DEPTH-MAP BASED DETECTION OF ITEMS ON CONVEYOR BELTS**

(30) Priority: 20.02.2025 US 202519058777
(71) Applicant: Datalogic IP Tech S.r.l., 40012 Calderara di Reno (BO) (IT)
(72) Inventor: Bravaglieri, Lisa, 41123 Modena (MO) (IT); Carraggi, Angelo, 40069 Zola Predosa (BO) (IT); Salcuni, Matteo, 40033 Casalecchio di Reno (BO) (IT); Vorabbi, Lorenzo, 47923 Rimini (RN) (IT)
(74) Representative: Riccardi, Elisa

(57) **Abstract**

A system receives 2D depth-map images of an empty conveyor belt. The system generates a training set of labelled 2D depth-map images based on the 2D depth-map images. The system trains or fine-tunes a neural network using the training set to form trained parameters that cause the neural network to detect items on the conveyor belt using 2D depth-map images of the items on the conveyor belt. In an alternative embodiment, a pre-trained neural network is configured to select feature map channels generated from 2D depth-map images of items on a conveyor belt. The selected channels are resized and combined to provide relevant data for generating a segmentation mask based of the items using a binarization threshold that is automatically determined. The system may include a pretrained image segmentation model that generates at least one instance segmentation mask from the 2D depth-map images.

## Description

### FIELD

The present application is directed to transport and logistic object detection, segmentation, and measurement.

### BACKGROUND

Recognition of thin items on various conveyor belt families and surface materials using 3D data from laser-based detection devices has limitations.

### SUMMARY

One aspect of the present embodiments includes the realization that conventional algorithms for processing 3D data and/or 2D images to detect and measure items on a conveyor belt are not always reliable. This problem is exacerbated when the item is on an unexpected position or orientation, where the item overlaps with another item, and where the conveyor belt has complex surfaces, such as with a cross-belt conveyor. The present embodiments solve this problem by using a neural network to process the 3D data and/or the 2D images to detect and measure the item on the conveyor belt. Advantageously, once trained (from scratch or from fine-tuning of pretrained models), the neural network improved reliability of the object detection and measurement.

Another aspect of the present embodiments includes the realization that processing 3D data (e.g., a point cloud) using a neural-network to detect items on a conveyor belt is computationally intensive. The computational power required is not usually available where the item detection is required. The present embodiments solve this problem by converting the 3D data into a 2D depth-map that effectively represents a 3D space captured in the 3D data as a 2D image. Advantageously, the 2D depth-map may be processed as an image by the neural network and requires significantly less computational power to process, allowing deployment of the neural network in many different embedded computer systems and devices.

Another aspect of the present embodiments includes the realization that training a neural network to recognize and measure items on a particular conveyor requires significant human intervention to generate a training set of sufficient complexity to train the neural network to correctly identify and measure expected items, since the training set requires a significant amount of input data based on the target environment with corresponding truth labels. The present embodiments solve this problem by autonomously generating the training set using a relatively small amount of 3D data and/or 2D images captured of the target conveyor without any items and by generating and adding synthetic items to the captured 3D data and/or 2D images with corresponding synthetic labels. Advantageously, minimum human intervention is required to generate the training set. Further, the captured 3D data and/or 2D images of the target conveyor without any items may be sent off-site (e.g., to a remote server or a cloud service) for generation of trained parameters used by the neural network during an inference phase.

Another aspect of the present embodiments includes the realization that training a neural network is expensive in both computing power and time. The present embodiments solve this problem by using a pretrained neural network to extract agnostic features from a 2D depth-map of the conveyor belt, and then retaining features maps containing relevant information for further processing to generate a segmentation mask. Advantageously, there is no time consuming data collection or neural network training needed and with reduced feature maps, performance of the deconvolutional layers of the neural network is expedited while maintaining output performance. Accordingly, deployment of this neural network based depth-map based detection of items on a conveyor belt is simplified.

The present embodiments achieve high detection and measurement accuracy using full resolution depth-maps captured from typical transport and logistic (T&L) tunnels positioned at the conveyor belt. Conventionally, items on the belt are detected by photosensors that can fail to sense thin items such as envelopes. The present embodiments detect any kind of item including thin envelopes. The present embodiments use neural networks, instead of ad-hoc traditional computer vision algorithms, to improve robustness of item detection for different scenarios, including the ability to adapt to different conveyor belt families, different environmental and lighting conditions, and other differences in installations and materials. Further, the disclosed embodiments may be installed on existing hardware (e.g., a software upgrade to an embedded computer) and may not require additional hardware where an existing dimensioning solution is available.

The present embodiments do not require any significant manual intervention for parameters/thresholds tweaking etc. Training of the neural networks does not require manual dataset annotations, thereby significantly simplifying integration as compared to conventional neural network training, since any training procedure in the field is simplified by use of a synthetically generated dataset. Further, 2D depth-map images are processed instead of conventional 3D data captured by 3D sensors in the T&L tunnels, reducing algorithm complexity and improving efficiency in terms of inference time.

In certain embodiments, the techniques described herein relate to a method for depth-map based detection of items on a conveyor belt using self-supervised neural network models, including: receiving 2D depth-map images of the conveyor belt when empty; generating a training set of labelled 2D depth-map images based on the 2D depth-map images; and training the neural network using the training set to form trained parameters.

The method may further include: capturing 3D data from at least one 3D sensor positioned at the conveyor belt when empty; and converting the 3D data to form the 2D depth-map images.

Alternatively or additionally, the generating the training set may further include: for each training sample of the training set:
selecting one 2D depth-map image of the conveyor belt;
generating a global label mask of black pixels having a size and a shape of the one 2D depth-map image;
determining a number of items to generate;
for each item to generate: determining characteristics for the item, the characteristics including an item length, an item width, an item average height, an item rotation, and an item position; generating a binary item mask defining the item in white pixels based on the characteristics; determining a random height noise; copying the binary item mask; and replacing each of the white pixels with a simulated height value based on the average height and the height noise to form an item mask;
pasting the item masks onto the 2D depth-map image; and
pasting the binary item masks onto the global label mask.

The method may further include, after said replacing for each item, generating, for a surface of the item, randomly sized and randomly positioned circles filled with different simulated height values based on different average height and different height noise.

Alternatively or additionally, the determining a number of items to generate comprising generating a random integer value in a range starting from zero.

Alternatively or additionally, the determining the random height noise may include defining a maximum amount of noise to be applied randomly to the average height when replacing the white pixels of the copied binary item mask.

Alternatively or additionally, the method may further include: capturing 3D data during operation of the conveyor belt to transport items; converting the 3D data to a 2D depth-map image; processing the 2D depth-map using the neural network and trained parameters; and generating at least one of an item count, an item position, and 3D measurements of the item.

In certain embodiments, the techniques described herein relate to a method for instance segmentation of items on a conveyor belt, including: receiving a 2D depth-map image of at least one item on the conveyor belt; generating a segmentation mask from the 2D depth-map image; generating an isolated 2D depth-map image from the 2D depth-map image and the segmentation mask; predicting, using a pretrained image segmentation model, at least one instance segmentation mask; filtering out redundant ones of the at least one instance segmentation mask; and validating remaining ones of the at least one instance segmentation masks.

In this second method, the isolated 2D depth-map image may isolate relevant portions of the 2D depth-map image for further processing.

Alternatively or additionally, said generating the segmentation mask may include processing the 2D depth-map image through a neural network trained to generate the segmentation mask.

Optionally, said neural network is not specifically trained using images of the conveyor belt.

Alternatively or additionally, the second method may further include: capturing 3D data from at least one 3D sensor positioned at the conveyor belt; and processing the 3D data to form the 2D depth-map image.

In certain embodiments, the techniques described herein relate to a method for depth-map based detection of items on a conveyor belt using unsupervised anomaly detection models, including: receiving 3D data of at least one item being transported by the conveyor belt; converting the 3D data into a 2D depth-map image; in a training phase: processing the 2D depth-map image through extraction layers of a pre-trained neural network to generate a plurality of training feature maps; generating configuration parameters that define selection and merging of ones of the training feature maps for further processing; and determining a binarization threshold using a dynamic criterion; in an inference phase: processing the 2D depth-map image through extraction layers of a pre-trained neural network to generate a plurality of inference feature maps; selecting and merging ones of the plurality of inference feature maps based on the configuration parameters to form relevant information; and generating a segmentation mask from the relevant information based on the binarization threshold.

In this third method, the dynamic criterion may include: computing, using a specialized distance metric, a distance value for each sample of a set of samples; determining a maximum value of the distance values; and determining the binarization threshold as a predefined percentile of the maximum value.

The specialized distance metric may include a Mahalanobis distance.

The predefined percentile may be a 99^{th} percentile.

Alternatively or additionally, in the third method, said generating configuration parameters may include:
for each feature map of the plurality of training feature maps: computing a standard deviation value independently for each channel of the feature map; and selecting a first n channels of the feature map with highest ones of the standard deviation values;
resizing the selected channels of each of the feature maps to have a common size and shape; and
concatenating the resized channels together to form the relevant information.

Alternatively or additionally, in the third method, the configuration parameters may define information required for object discrimination and segmentation during the inference phase.

Optionally, updating the configuration parameters in response to changes in an operational environment.

Alternatively or additionally, the third method may further comprise repeating actions of the training phase to update the binarization threshold.

### BRIEF DESCRIPTION OF THE FIGURES

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey any information regarding the actual shape of the particular elements, and have been solely selected for ease of recognition in the drawings.
FIG. 1 is a schematic diagram illustrating one example system for depth-map based detection of items on a cross-belt conveyor, in embodiments.
FIG. 2 shows the system of FIG. 1 in further example detail.
FIG. 3 is a flow diagram illustrating acts implemented by the training set generator of FIG. 2 to generate a training set, in embodiments.
FIG. 4 is a flowchart illustrating one example method for generating the training set of FIG. 2, in embodiments.
FIG. 5 is a schematic diagram illustrating self-supervised training of the neural network using the training set of FIG. 2, in embodiments.
FIG. 6 shows one example 2D depth-map image of two items on the cross-belt conveyor, a corresponding output prediction generated by the neural network, and a corresponding segmentation mask, in embodiments.
FIG. 7 shows three example multiple-item worst case scenarios for relative positions of items on the cross-belt conveyor that are resolved by the system of FIG. 1.
FIG. 8 is a schematic diagram illustrating the system of FIG. 1 further including an instance segmentation model for differentiating and isolating individual item instances within the 2D depth-map image of FIG. 2, in embodiments.
FIG. 9 is a flowchart illustrating one example method for instance segmentation of items on a conveyor belt, in embodiments.
FIG. 10 is a schematic diagram illustrating example processing of the 2D depth-map image of FIG. 2 using the segmentation mask of FIG. 6 to generate an isolated depth-map image, in embodiments.
FIG. 11 is a data flow diagram illustrating generation of at least one instance segmentation mask by an instance model from the isolated depth-map image of FIG. 10, in embodiments.
FIG. 12A is a data flow diagram illustrating the filter implemented by block 910 of FIG. 9 in further example detail.
FIG. 12B is a schematic illustrating computing of an intersection area between the instance segmentation mask of FIG. 11 and the segmentation mask of FIG. 10, in embodiments.
FIG. 13 is a schematic diagram of one example system with the neural network of FIG. 2 operating with pretrained parameters and illustrating example components and resulting flow of information when processing the 2D depth-map image to extract features, in embodiments.
FIG. 14 is a flowchart illustrating linkage between a training phase and an inference phase of the system of FIG. 13, in embodiments.
FIG. 15 is a schematic diagram illustrating a multi-dimensional structure of one example feature map of FIG. 13, in embodiments.
FIG. 16 is a flowchart illustrating one example method for isolating and extracting the most useful and valuable information from the feature maps of FIG. 13, in embodiments.
FIG. 17 is a schematic diagram showing five images of example channels of the feature map of FIG. 13 and corresponding standard deviation values, in embodiments.
FIG. 18 shows one example 2D depth-map image of a noisy thin parcel, a corresponding detection heatmap, and resulting contour overlay with a segmented contour, in embodiments.
FIG. 19 is a table showing performance related to the 3D sensors of FIG. 1 that capture a single line of information at a time.
FIGs. 20A and 20B are graphs showing sample distributions of empty depth values in inches for a traditional conveyor and a cross-belt conveyor, respectively.

### DETAILED DESCRIPTION OF THE EMBODIMENTS

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with scanners, safety laser scanners, computers, processors (hardware processors) memory or other storage have not been shown or described in detail to avoid unnecessarily obscuring descriptions of the various implementations and embodiments.

Unless the context requires otherwise, throughout the specification and claims which follow, the word "comprise" and variations thereof, such as, "comprises" and "comprising" are to be construed in an open, inclusive sense that is as "including, but not limited to."

Reference throughout this specification to "one implementation" or "an implementation" or "one embodiment" or "an embodiment" means that a particular feature, structure or characteristic described in connection with the embodiment is included in at least one implementation or embodiment. Thus, the appearances of the phrases "one implementation" or "an implementation" or "in one embodiment" or "in an embodiment" in various places throughout this specification are not necessarily all referring to the same implementation or embodiment. Furthermore, the particular features, structures, or characteristics may be combined in any suitable manner in one or more implementations or one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

### Introduction

The following examples and embodiments relate to recognizing items on a cross-belt conveyor. However, the disclosed embodiments may be used in other environments where item detection and segmentation is useful without departing from the scope hereof. For example, the disclosed embodiments may be used with conventional conveyors, used in a static industrial scene (for example in the manufacturing field) to detect objects during and after processing, used to detect items at small scales, and so on. The disclosed algorithms and techniques may be used for processing data from a multitude of 3D sensors. The following examples illustrate detection of packages and envelopes, however, the embodiments herein may detect other items without departing from the scope hereof. For example, the types, sizes, and shapes of items being detected and segmented may vary, and may depend on the installed environment. The disclosed embodiments may be used to detect and optionally measure any type of item, including tires, baggage, bags of various materials and shapes, and so on.

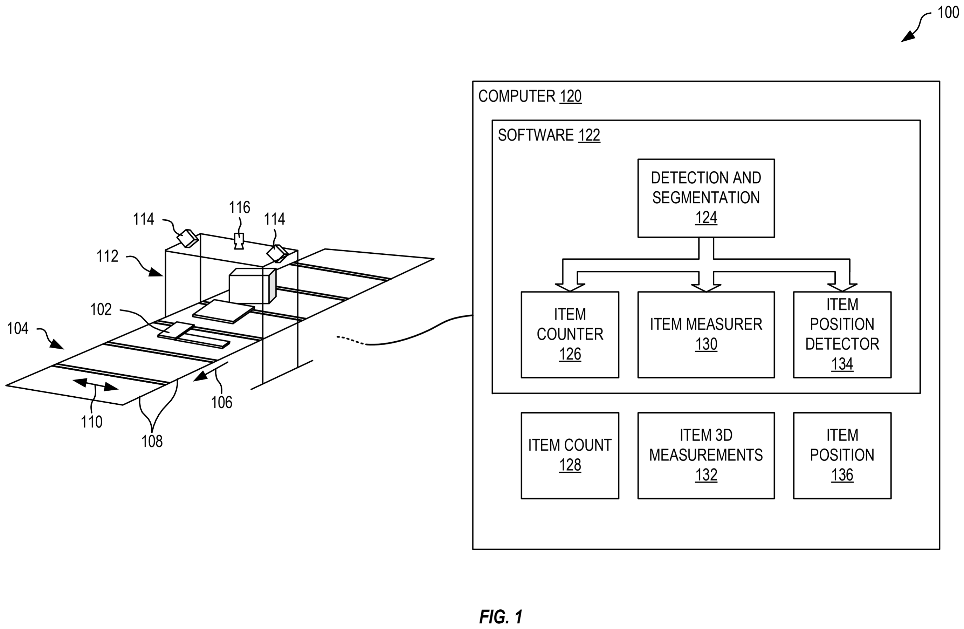

FIG. 1 is a schematic diagram illustrating one example system 100 for depth-map based detection of items 102 on a cross-belt conveyor 104, in embodiments. Cross-belt conveyor 104 moves as indicated by arrow 106 and is formed of a plurality of cross-belt segments 108 that each implement a movement, indicated by arrow 110, that is perpendicular to the movement indicated by arrow 106. A transport and logistics (T&L) tunnel 112 (e.g., formed by a frame positioned over cross-belt conveyor 104) supports at least one sensor and may include an computer 120. Computer 120 may represent an industrial PC (e.g., used for training and/or inference) and an embedded computer (e.g., used for inference). In the example of FIG. 1, T&L tunnel 112 supports two 3D sensors 114 and a camera 116; however, T&L tunnel 112 may support other sensors and devices without departing from the scope hereof. Tunnel 112, 3D sensors 114, camera 116, and computer 120 may be part of an existing monitoring and/or measurement device of cross-belt conveyor 104, whereby system 100 is implemented as software 122 running in computer 120 in addition to other functionality of computer 120. In certain installations, one or more of T&L tunnel 112, 3D sensors 114, and computer 120 are added as part of system 100 to support operation of software 122. That is, system 100 may share certain equipment and/or functionality with other devices, or system 100 may include these devices when not already available.

As items 102 pass through T&L tunnel 112, 3D sensors 114 generate 3D data (e.g., a sparse point cloud) that is processed by software 122. Software 122 implements detection and segmentation 124 of items from the conveyor background and include an item counter 126 that generates an item count 128, and an item position detector 134 that generates an item position 136. Optionally, software 122 includes an item measurer 130 that generates item 3D measurements 132. After detection and segmentation 124, instances of the items may be counted. For example, a segmentation heatmap may be used for counting segmented blobs, or the segmentation heatmap may be used in combination with the original 3D data to better divide items that are touching or stacked into separate instances. For example, the different depths of close items may be used to distinguish when a segmented blob represents multiple items. 3D measurements 132 may be implemented as part of an existing device. For example, the segmented detection mask of each 3D sensors 114 may be passed to the existing measurements algorithm.

Item position 136 may be used to provide information to operators of cross-belt conveyor 104. For example, item position 136 may be used to determine a position of the items on cross-belt conveyor 104, trigger alerts when items are misplaced, stacked, hanging out of the belt, and/or signal the presence of double items in certain applications where a single item is expected. For example, certain applications may expect one item per cross belt of cross-belt conveyor 104.

Advantageously, system 100 improves reliability of detection and measurement of items 102 on cross-belt conveyor 104.

### Self-Supervised Training

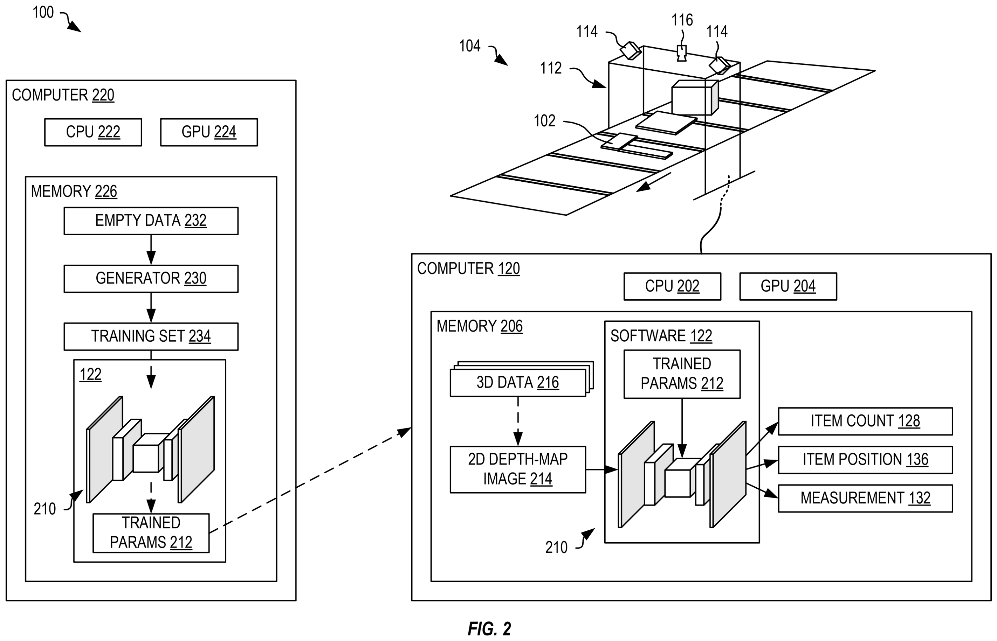

FIG. 2 shows system 100 of FIG. 1 in further example detail. Computer 120 includes at least one central processing unit (CPU) 202, an optional graphical processing unit (GPU) 204, and memory 206. Computer 120 may include a user interface (e.g., a display, keyboard, etc.) that facilitates communication with an operator and may include a network interface (wired and/or wireless) and/or other interfaces without departing from the scope hereof. Software 122 is stored in memory 206 and implements a neural network 210 that is configured with trained parameters 212 to run on CPU 202 and on GPU 204 when included. Software 122 processes a 2D depth-map image 214 that is derived from 3D-data 216 captured by 3D sensors 114 to generate at least one of item count 128, 3D measurements 132, and item position 136 of detected and segmented items 102 on cross-belt conveyor 104. Operation of system 100 is described in further detail below.

To train a neural network, a large training dataset of information relevant to the task that the neural network is to perform is collected. Ideally, that data is collected from the same equipment for which the neural network is to perform. Conventionally, to train neural network 210 to detect items 102 on cross-belt conveyor 104, one or more operators place items 102 on cross-belt conveyor 104 and collect 3D data from 3D sensors 114. The collected data is then labelled with ground truths. Collecting and labelling of a large training dataset is a time consuming manual process and therefor it is expensive and creates a significant lead time for deployment of the neural network.

The present embodiments provide a training solution the minimizes the manual effort required to train neural network 210. In the example of FIG. 2, a computer 220 separate from computer 120 (e.g., a laptop computer or a remote service) is used to train neural network 210 and generate trained parameters 212 that control operation of neural network 210, For example, it is often more convenient to use a separate, and possibly more powerful, computer for training neural network 210. However, neural network 210 may also be trained on computer 120 without departing from the scope hereof.

Computer 220 includes a CPU 222, optionally a GPU 224, and memory 226 storing a training set generator 230 that includes machine-readable instructions that when executed by CPU 222 and/or GPU 224 (when available) cause computer 220 to generate a training set 234 based on empty data 232. Empty data 232 is generated by capturing a small amount, as compared to the size of conventional training sets, of 3D data from 3D sensors 114 as cross-belt conveyor 104 operates without any items thereon. To ensure all variations of cross-belt conveyor 104 are accounted for, empty data 232 capture at least one full rotation of cross-belt conveyor 104; however, empty data 232 may include more or less data without departing from the scope hereof.

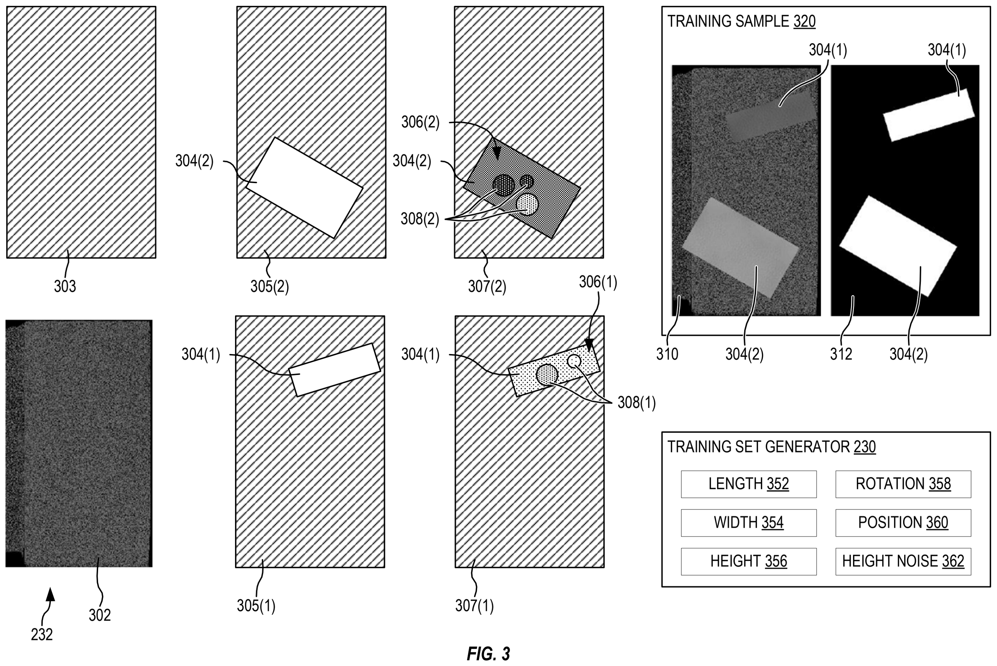

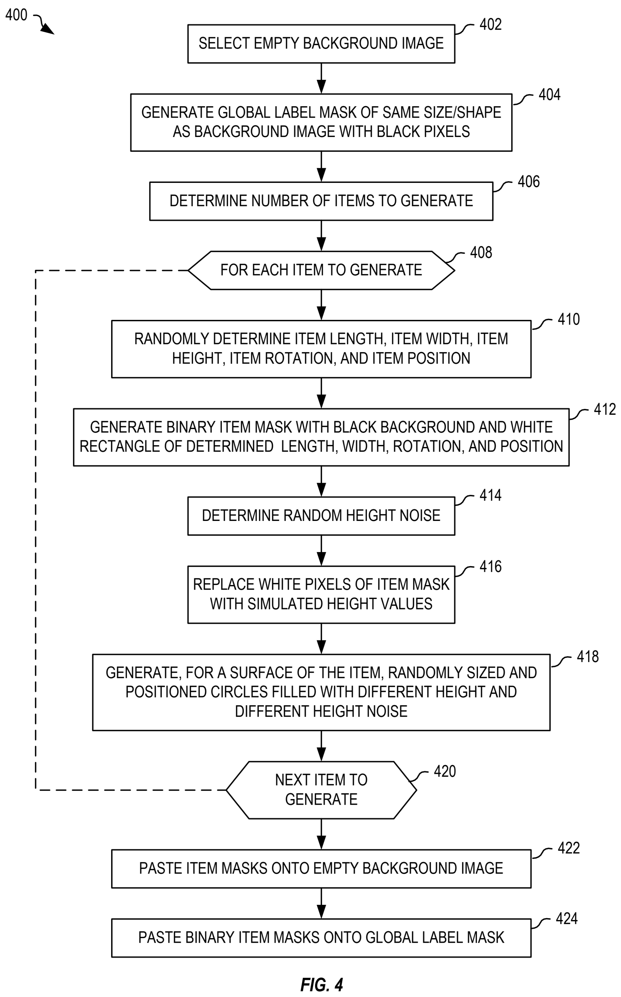

FIG. 3 is a flow diagram illustrating acts implemented by training set generator 230 of FIG. 2 to generate training set 234, in embodiments. FIG. 4 is a flowchart illustrating one example method 400 for generating training set 234 of FIG. 2, in embodiments. FIGs. 3 and 4 are described together in the following description. Method 400 is implemented at least in part by training set generator 230.

As shown in FIG. 3, empty data 232 is captured using 3D sensors 114 of cross-belt conveyor 104 operating without transporting items (e.g., empty). Empty data 232 is a small (e.g., as compared to the size of a conventional training dataset for a neural network) of real depth-map data for cross-belt conveyor 104. Accordingly, empty data 232 includes nuances of cross-belt conveyor 104 and cross-belt segments 108 that may appear in subsequently captured data. However, empty data 232 does not include example objects positioned on cross-belt conveyor 104.

In block 402, method 400 selects an empty background image. In one example of block 402, training set generator 230 selects a portion of empty data 232 as an empty background image 302, where empty background image 302 defines a depth-map image of cross-belt conveyor 104. In certain embodiments, the portion is selected at random. In other embodiments, the portion is selected based on a predefined sequence.

In block 404, method 400 generates a global label mask of same size/shape as background image with black pixels. In one example of block 404, training set generator 230 generates global label mask 303 based on empty background image 302.

In block 406, method 400 determines a number of items to generate. In one example of block 406, training set generator 230 generates a random integer value in a range starting from zero. In the example of FIG. 3, the number of items to generate is two.

Blocks 408 through 420 for a loop that iterates for the number of items to generate of block 406. For example, where the number of items to generate is zero, blocks 408 through 420 are not performed; where the number of items to generate is two, two iterations of blocks 408 through 420 are performed.

In block 410, method 400 randomly determines an item length, an item width, an item height, an item rotation, and an item position. In one example of block 410, training set generator 230 randomly generates an item length 352, an item width 354, an item height 356, an item rotation 358, and an item position 360 of a synthetic item 304(1). In block 412, method 400 generates a binary item mask with a black background and white rectangle of the determined length, width, rotation, and position. In one example of block 412, training set generator 230 generates a binary item mask 305(1) (e.g., a copy of global label mask 303) with a black background and adds synthetic item 304(1) as a white rectangle having item length 352, item width 354, and item rotation 358, at item position 360. In another example of block 412, for a different iteration of blocks 408 through 420, training set generator 230 generates a binary item mask 305(2) with a black background and adds synthetic item 304(2) as a white rectangle of the determined length, width, and rotation, and at the determined position. Binary item masks 305 are the same size as global label mask 303, for example.

In block 414, method 400 determines a random height noise. In one example of block 414, training set generator 230 generates a height noise 362 as a random number that represents a maximum amount of noise to be applied to item height 356. In block 416, method 400 replaces white pixels of the item mask with simulated height values. In one example of block 416, training set generator 230 copies binary item mask 305(1) to form an item mask 307(1) and fills white pixels of synthetic item 304(1) with a height value based on item height 356 randomized by a maximum height noise 362. In another example of block 416, training set generator 230 copies binary item mask 305(2) to form an item mask 307(2) and fills white pixels of synthetic item 304(2) with a height value based on item height 356 randomized by a maximum height noise 362.

Block 418 is optional. If included, in block 418, method 400 generates, for a surface of the item, randomly sized and positioned circles filled with different height and different height noise. In one example of block 418, training set generator 230 generates height circles 308(1) with differing height values on surface 306(1) of synthetic item 304(1) in item mask 307(1). In another example of block 418, training set generator 230 generates height circles 308(2) with differing height values on surface 306(2) of synthetic item 304(2) in item mask item mask 307(2). In block 420, method 400 determines whether to repeat blocks 408 through 420 to generate another synthetic item 304.

In block 422, method 400 pastes the item masks onto the empty background image. In one example of block 422, training set generator 230 pastes item mask 307(1) and item mask 307(2) onto empty background image 302 to form a training set image 310. In block 424, method 400 paste the binary item masks onto the global label mask. In one example of block 424, training set generator 230 pastes binary item mask 305(1) and binary item mask 305(2) onto global label mask 303 to form label 312. Collectively, training set image 310 and label 312 form a training sample 320 of training set 234. Training set generator 230 repeatedly invokes method 400 to generate a desired number of training samples 320 for training set 234. Ablation studies (described in further detail below) perform multiple experiments to determine how the number of training samples contribute to the overall system performance and stability. A minimum number of training samples defines the training required for all models without losing significant accuracy on the available datasets.

Empty data 232 includes only a small dataset of real depth-maps of cross-belt conveyor 104 operating when empty. Empty data 232 is then automatically augmented and enriched by simulating the presence of synthetic items 304 of various sizes, orientations, and positions with corresponding ground truth labels 312. Training set generator 230 generates a statistically meaningful training set 234 that includes multiple training samples 320 of training set images 310 (e.g., depth-maps) of simulated items 304, varying in number (e.g., including zero), size, orientation, and position, being transported by cross-belt conveyor 104. Since human intervention is minimal (e.g., perhaps only the capturing of empty data 232), minimal human effort is required to obtain as many training samples as desired, starting from just a few real background examples captured in empty data 232.

To make operation of neural network 210 (e.g., the neural network models) more robust and capable of detecting items in very noisy data, the level of noise (e.g., maximum height noise 362) on synthetic items 304 generated for training set 234 may be increased. Noise is always present in data captured by 3D sensors 114, especially where items being transported by cross-belt conveyor 104 include families of materials that constitute a weak point for laser-based 3D detection systems due to the physics of the sensing process itself and the light scattering and absorption properties of surfaces of the items. For example, dark or plastic wrapped items show increased levels of noise in data captured by 3D sensors 114.

Advantageously, generation of training set 234 is substantially effortless, and may be performed in the field (e.g., at or near a location of cross-belt conveyor 104) with little human involvement. Particularly, generation of training set 234 requires no time-consuming data acquisition sessions, since acquisition of data for a large number of real items on cross-belt conveyor 104 is not required. As noted above, the only human effort required is to operate cross-belt conveyor 104 without conveying items to capture empty data 232. Further, each training sample 320 includes an automatically generated training set image 310 with corresponding label 312, and therefore manual annotation of training set 234 is not required. This is a significant reduction of effort as compared to any conventional method of creating a training set for a neural network, which requires the very time-consuming, user-dependent, and error-prone, manual step of labeling real objects of interest in images to perform supervised training of an object detector.

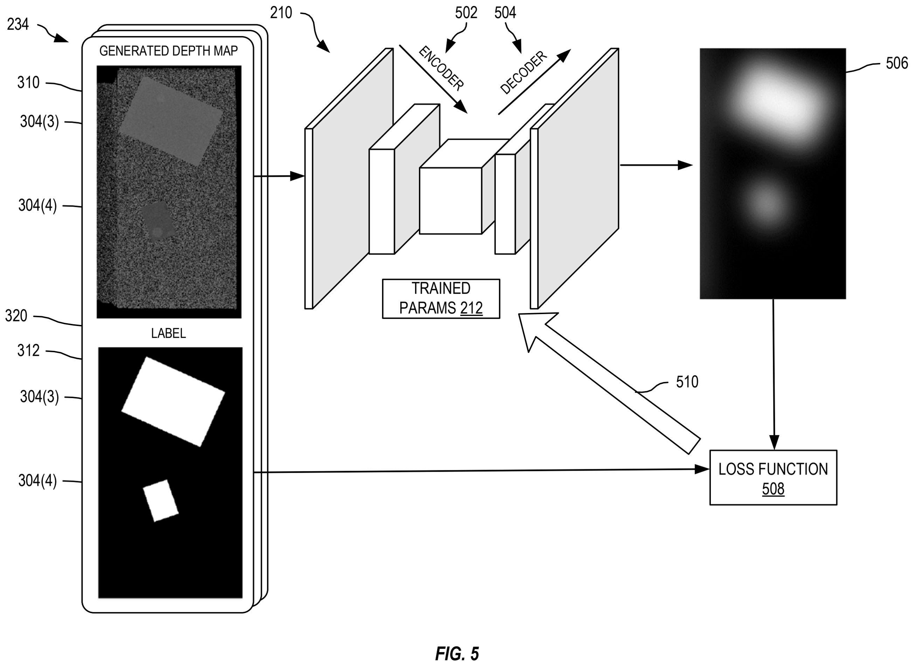

FIG. 5 is a schematic diagram illustrating self-supervised training of neural network 210 using training set 234 of FIG. 2, in embodiments. As shown in FIG. 2, this self-supervised training is performed on computer 220; however, this self-supervised training may also be performed on computer 120. Neural network 210 (commonly referred to as an autoencoder), formed as an encoder 502 and a decoder 504, operates to extract features so that detection probabilities are inferred. Encoder 502 is initialized with pre-trained or random weights.

In one example of operation, neural network 210 is fed with training set images 310 of training set 234 and neural network 210 generates an output prediction 506 for each training set image 310. Output prediction 506 is compared to label 312 (e.g., the input ground truth label corresponding to the input training set image 310) by a loss function 508. A backward pass 510 computes gradients of loss function 508 with respect to the weights and inputs to update parameters of neural network 210 until convergence is achieved.

Alternative autoencoder models may be used, and these autoencoder models have the following architectural distinctions. In a first alternative model, a shallow custom autoencoder is made with convolutional layers, whose weights (less than 5k parameters) are trained from scratch using only training set 234. The other two models are autoencoders that include encoders (blocks of layers of MobileNet and EfficientNetB0) made from pre-trained popular neural network backbones. Custom convolutional layers are added as decoders (having a maximum of 25k parameters). Certain blocks of layers from the backbones are extracted without fine-tuning their weights to preserve feature extraction capabilities. Instead, the custom decoder block is trained from scratch using training set 234.

As a pre-processing step, before forwarding depth-maps to neural network 210, values of the depth-maps are rescaled in range [-1,1], in the domain of layer activation functions.

Loss function 508 is used to train all methods and is a binary cross-entropy, computed between the ground truth (e.g., label 312 - the synthetically generated binary masks indicating the items locations on the scene) and the predicted heatmap (e.g., output prediction 506 - the output of the network obtained with the last convolutional layer and its sigmoid activation function).

Several training techniques were successfully investigated, including (a) train from scratch, b) fine-tune any pre-trained model, and (c) freeze some layers. Train from scratch (a) is where all three proposed models were trained from scratch from randomly distributed initial weights. Fine-tune any pre-trained model (b) is where the model starts with pre-trained weights and fine-tuning training is applied using training set 234. For example, all the three proposed models were trained using data of traditional conveyor belts, and then fine-tuned using conveyor belt data (e.g., empty data 232) captured at a target facility. Even when there were difference between the conveyor belts, the already learned detection task was adapted to the specific background features during fine-tuning. Freeze some layers (c) is where frozen layers weights are preserved and not updated during training. For example, certain blocks of weights were frozen (e.g., backbone model layers pre-trained on ImageNet) to preserve the feature extraction capabilities, and the remaining layers were trained.

In summary, the major steps required for training if neural network 210 include: (1) acquisitions - capture depth-maps of empty backgrounds on the field when the conveyor runs without transporting any item on its surface; (2) dataset generation - run a script to automatically generate training samples (e.g., training set 234); and (3) training - run the self-supervised training script.

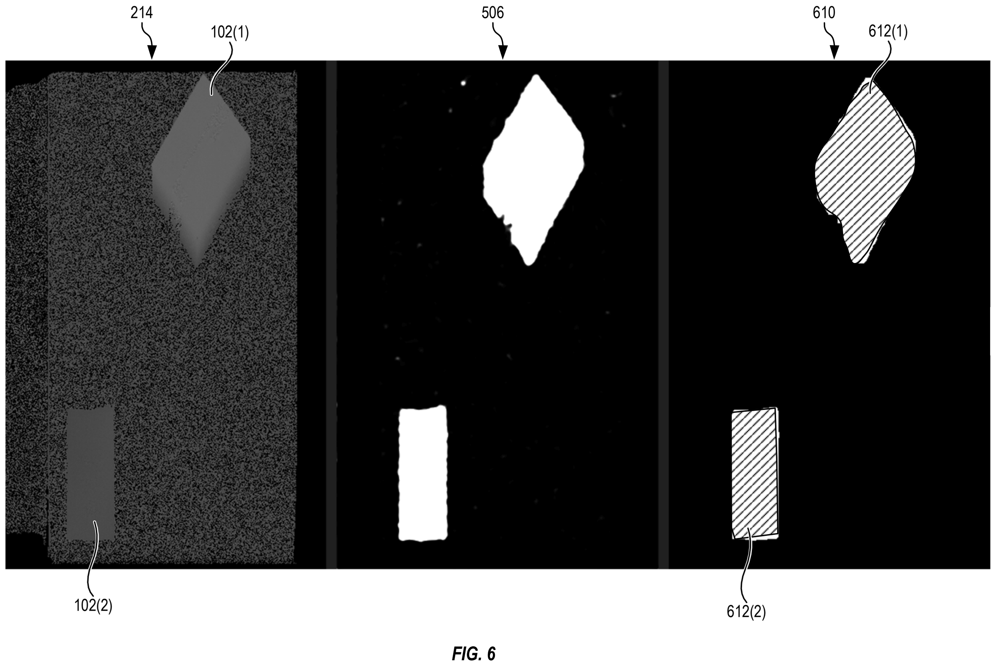

FIG. 6 shows one example 2D depth-map image 214 of two items 102(1) and 102(2) on cross-belt conveyor 104, a corresponding output prediction 506 generated by neural network 210, and a corresponding segmentation mask 610, in embodiments. Segmentation mask 610 is generated from output prediction 506 defining two region/areas 612(1) and 612(2) that may be used to isolate each item 102(1) and 102(2) within 3D depth-map image 214. For example, segmentation mask 610 allows the background of 3D depth-map image 214 to be ignored in subsequent processing by system 100.

### Instance Segmentation

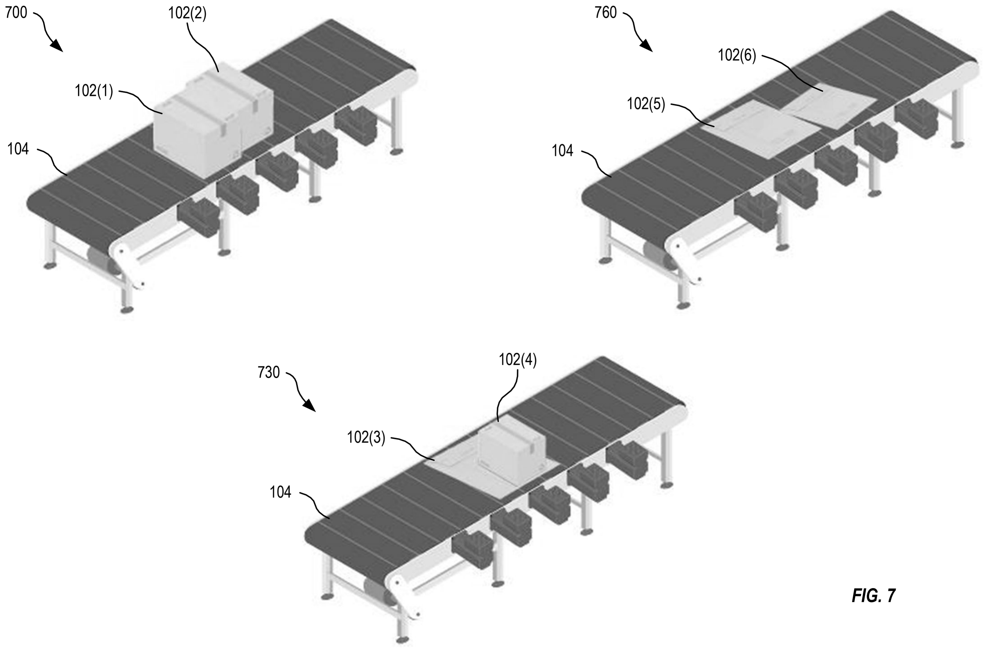

FIG. 7 shows three example multiple-item worst case scenarios 700, 730, and 760, for relative positions of items 102 on cross-belt conveyor 104 that are resolved by system 100 of FIG. 1. Scenario 700 shows two items 102(1) and 102(2) that are side by side such that items 102(1) and 102(2) share a common side or edge. Scenario 730 shows two items 102(3) and 102(4) that are stacked, where item 102(4) is over item 102(3). Scenario 760 shows two items 102(5) and 102(6) that are touching (e.g., in contact with each other).

System 100 monitors T&L tunnel 112 to identify items of the logistic pipeline and may determine performance of cross-belt conveyor 104, thereby contributing to overall efficiency of the logistics operation provided by cross-belt conveyor 104. System 100 detects items (e.g., packages and envelopes) on cross-belt conveyor 104 and may also detect any anomalies that could damage or impede operation of cross-belt conveyor 104 (e.g., the logistic process).

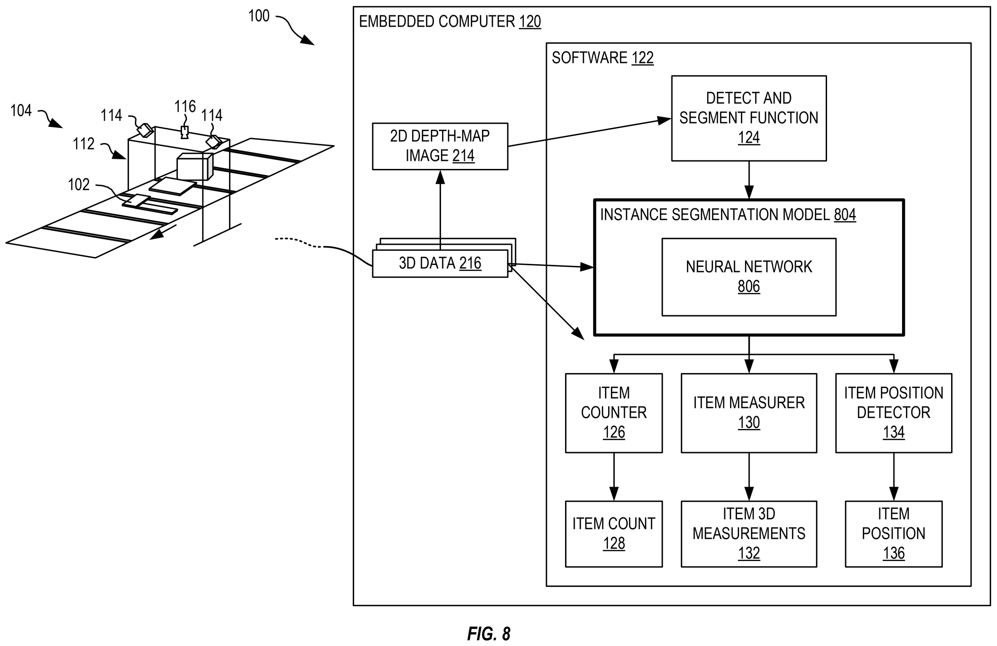

FIG. 8 is a schematic diagram illustrating system 100 of FIG. 1 further including an instance segmentation model 804 for differentiating and isolating individual item instances within 2D depth-map image 214 of FIG. 2, in embodiments. Instance segmentation model 804 implements a pre-trained neural network 806 that distinguishes item regions within 2D depth-map image 214 even when items 102 are stacked, placed in side-by-side, or in contact with each other. Output from instance segmentation model 804 further improves operation of item counter 126, item measurer 130, and/or item position detector 134, thereby improving reliability and accuracy of system 100. For example, item counter 126 quantifies the number of individual items within a defined space to generate item count 128, and better distinguishes items that are touching or overlap on cross-belt conveyor 104. Similarly, item measurer 130 computes the size of each differentiated item by processing 3D-data 216 generated from 3D sensors 114 (e.g., multiple views where multiple 3D sensors 114 are present) to determine 3D measurements 132 of each item event when touching or overlapping. Advantageously, as compared to other prior art solutions, item measurer 130 includes a refinement step to produce accurate measurements even for very flat objects (e.g., a flat envelope) by using output from achieved the pre-processing pipeline introduced is fundamental to measure objects whose height is hardly distinguishable from belt.. Particularly, flat items on cross-belt conveyor 104 usually produce a noisier depth measurements that, using prior art algorithms, lead to a high false positive detection rate. Item position detector 134 uses output from instance segmentation model 804 to generate item position 136 by analyzing 3D-data 216 to verify the correct positioning of each item 102, even when the items are touching or overlap. Each conveyor structure has a predefined area (e.g., region of interest) that represents a boundary of the conveyor in which the items should be positioned. Typically, for a cross-belt conveyor, the predefined area relates to a single cell area. This area may be human defined or may be determined by algorithm based on 2D depth-map image 214 and/or 3D-data 216. For example, where an item is only partially contained on conveyor 104, item position detector 134 generates item position 136 that (e.g., together with corresponding 3D measurements 132) indicates that item 102 is misplaced and extending beyond the boundaries of cross-belt conveyor 104 and may therefore cause a collision with other infrastructure or object near cross-belt conveyor 104. Advantageously, when reported, item position 136 and 3D measurements 132 may allow for correction of the misplaced item and stoppage and/or damage may be avoided.

Instance segmentation model 804 uses a pre-trained neural network 210 (e.g., where trained parameters 212 are not specifically trained on cross-belt conveyor 104) to differentiate and isolate individual instances of items 102 within 3D depth-map image 214. This allows us to accurately identify and separate each instance, enabling precise segmentations and analysis of the objects within the scene. This means that our system can be easily integrated into different manufacturing environments, allowing for seamless and efficient operation.

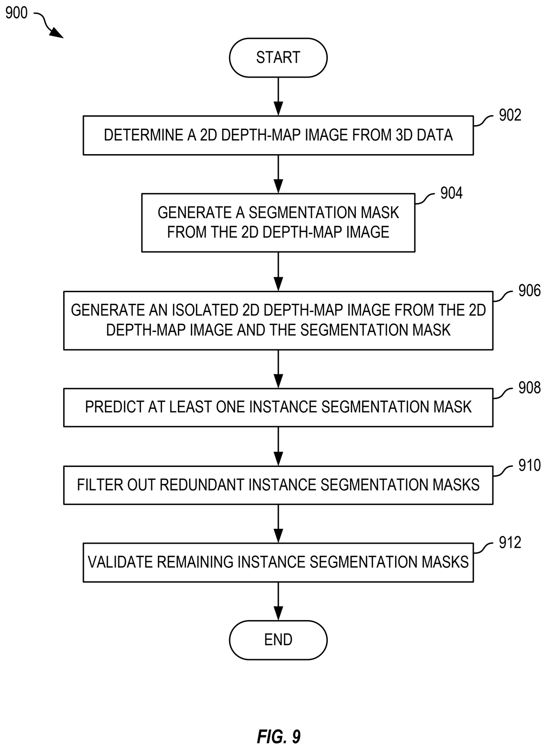

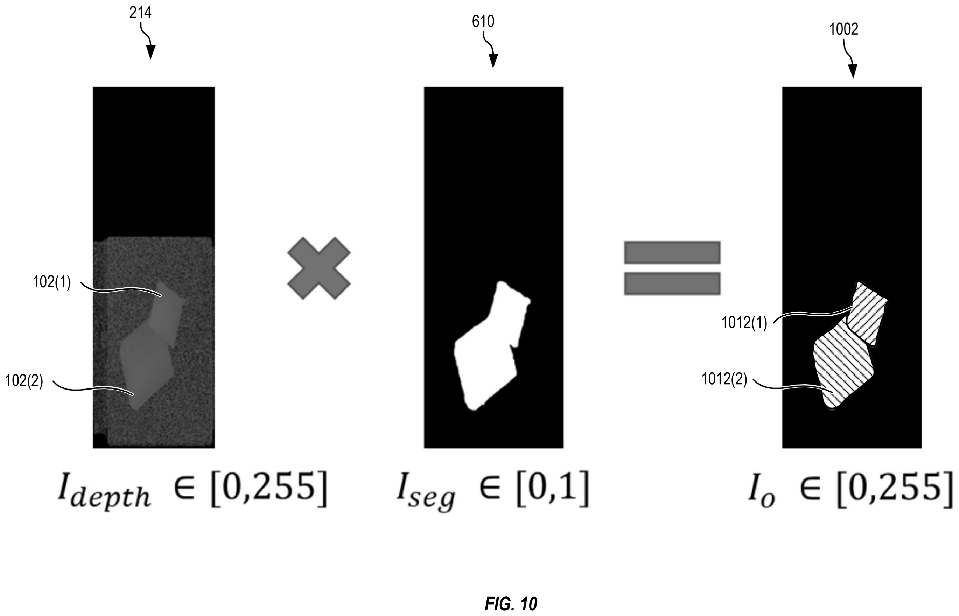

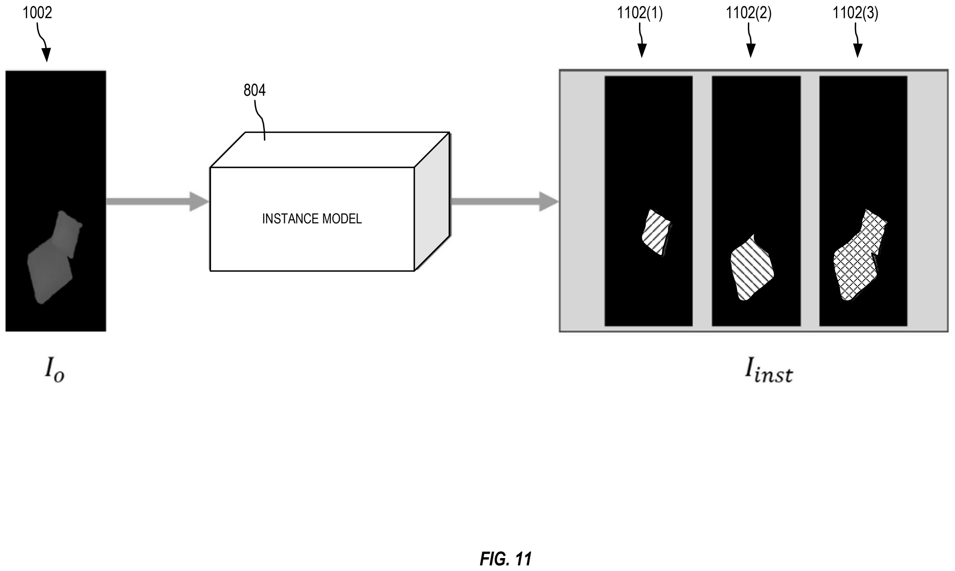

FIG. 9 is a flowchart illustrating one example method 900 for instance segmentation of items on a conveyor belt, in embodiments. Method 900 is implemented at least in part by instance segmentation model 804, for example. FIG. 10 is a schematic diagram illustrating example processing of 2D depth-map image 214 of FIG. 2 using segmentation mask 610 of FIG. 6 to generate an isolated depth-map image 1002, in embodiments. FIG. 11 is a data flow diagram illustrating generation of at least one instance segmentation mask 1102 by instance segmentation model 804 of FIG. 8 from isolated depth-map image 1002 of FIG. 10, in embodiments. FIGs. 9, 10, and 11 are best viewed together in the following description.

In block 902, method 900 determines a 2D depth-map image from 3D data captured by 3D sensors positioned at the conveyor belt. In one example of block 902, software 122 processes 3D-data 216 and generates 2D depth-map image 214.

In block 904, method 900 generates a segmentation mask from the 2D depth-map image. In one example of block 904, neural network 210 operates with trained parameters 212 to generate segmentation mask 610 from 2D depth-map image 214.

In block 906, method 900 generates an isolated 2D depth-map image from the 2D depth-map image and the segmentation mask. In one example of block 906, instance segmentation model 804 generates an isolated depth-map image 1002 from 2D depth-map image 214 using segmentation mask 610. That is, instance segmentation model 804 combines 2D depth-map image 214 with a corresponding segmentation mask 610 (e.g., obtained from detection and segmentation 124 of FIG. 1) to generate isolated depth-map image 1002 that isolates the regions of interest 1012(1) and 1012(2) corresponding to detected items 102(1) and 102(2). In the example of FIG. 10, *Idepth* denotes 2D depth-map image 214 generated from 3D-data 216 captured by 3D sensors 114, *Iseg* denotes segmentation mask 610 generated by instance segmentation model 804, and *Io* denotes isolated depth-map image 1002 that is an output bitmap resulting from isolation of the areas of 2D depth-map image 214 defined by segmentation mask 610.

In block 908, method 900 predicts, using a pretrained image segmentation model, at least one instance segmentation mask. In one example of block 908, instance segmentation model 804 processes isolated depth-map image 1002 and generates instance segmentation masks 1102(1), 1102(2), and 1102(3). For example, pre-trained neural network 806 processes isolated depth-map image 1002 to determine instance segmentation mask 1102(1) that includes a mask of item 102(1), to determine instance segmentation mask 1102(2) that includes a mask of item 102(2), and to determine instance segmentation mask 1102(3) that includes a mask of items 102(1) and 102(2) combined.

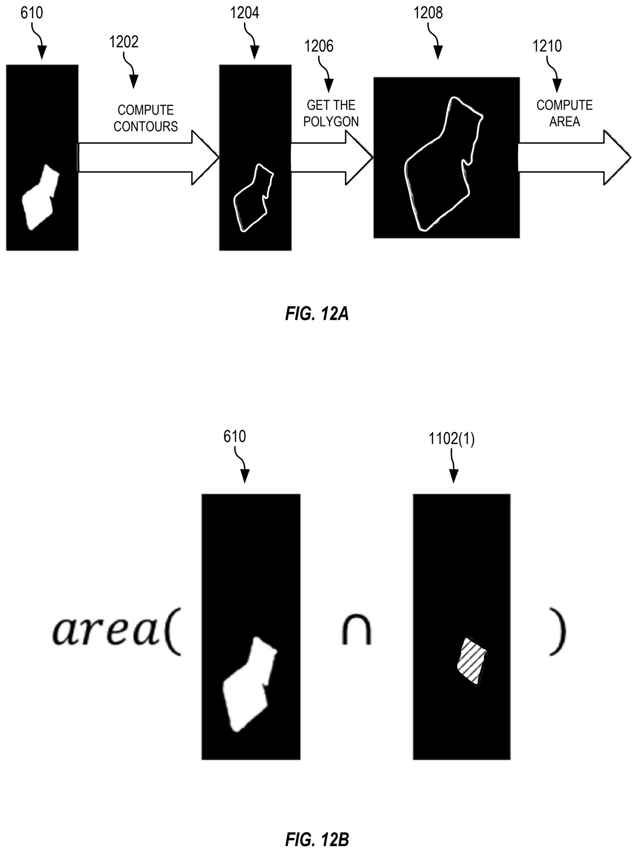

In block 910, method 900 filters out redundant ones of the at least one instance segmentation mask. In one example of block 910, instance segmentation model 804 applies a post-processing pipeline (e.g., see FIG. 12A, described below) that determines which, if any, of instance segmentation masks 1102 to discard. In block 912, method 900 validates remaining ones of the at least one instance segmentation masks. Validation is described in detail below.

FIG. 12A illustrates the filter implemented by block 910 of FIG. 9 in further example detail. First, an area of a blob defined in segmentation mask 610 is computed, then the contours of the blob are extracted. As shown in FIG. 12A, a compute contours function 1202 processes segmentation mask 610 to generate a contour image 1204. Then, a get-polygon function 1206 processes contour image 1204 to convert the contour image 1204 into a polygon illustrated as a contour 1208, which in turn is processed by a compute area function 1210 that is defined by equation (1) below. $A \left({I}_{seg}\right) = \frac{1}{2} {\sum }_{i = 1}^{n} {x}_{i - 1} {y}_{i} - {x}_{i} {y}_{i - 1}$ where: *x, y* is the 2D coordinate of the contour, and *n* is the number of points in the contour.

For each instance segmentation mask 1102, denoted as *Iᵢₙₛₜ*[*j*], the following steps are performed. FIG. 12B is a schematic illustrating computing of an intersection area between instance segmentation mask 1102 and segmentation mask 610 of FIG. 10, as defined by equation (2). $A \left({I}_{seg}∩{I}_{inst}\left[j\right]\right) = area$

When the computed intersection area does not satisfy equation (3), *Iᵢₙₛₜ*[*j*] is removed (discarded). $\left\{\begin{matrix}A \left({I}_{seg}∩{I}_{inst}\left[j\right]\right) \leq γ ⋅ A \left({I}_{seg}\right) \\ A \left({I}_{seg}∩{I}_{inst}\left[j\right]\right) \leq \left(1-γ\right) ⋅ A \left({I}_{seg}\right)\end{matrix}\right.$ where *γ* ∈ [0,1], a typical value is 0.9, and *A*(*I_{seg}*) represents the area of the blobs extracted in the segmentation mask. When *Iᵢₙₛₜ*[*j*] satisfies equation (3), as in the case of instance segmentation mask 1102(1), it is added to a valid object instance set denoted as *δ*.

The validation, implemented by block 912, of each instance segmentation mask 1102 is performed as follows. Instance segmentation masks 1102 generated by pre-trained neural network 806 are merged to form a unique segmentation mask as defined by equation (4). ${I}_{merged} = {\sum }_{j = 1}^{\left|δ\right|} {I}_{inst} \left[j\right]$
where *δ* = [*Iᵢₙₛₜ*[0], *Iᵢₙₛₜ*[1], *Iᵢₙₛₜ*[2], ··· ] and |*δ*| is the cardinality of *δ*.

The contours and area (denoted as *A*(*I_{merged}*)) of the merged segmentation mask is computed. If the condition *A*(*I_{merged}* ∩ *I_{seg}*) ≥ *γ* · *A*(*I_{seg}*) is satisfied, then the instances found are good candidates. Otherwise, a new instance is generated by equation (5) and added to the object instance set *δ*. ${I}_{new} = {I}_{merged} - {I}_{seg}$

Accordingly, object instance set *δ* is set of validated items found within 2D depth-map image 214.

### Unsupervised Anomaly Detection

In an alternative approach, specific training of neural network 210 is not performed, and neural network 210 operates using pretrained parameters that cause neural network 210 to extract basic/generic features of 2D depth-map image 214. That is, in this embodiment, generator 230 is not used to generate training set 234 (e.g., method 400 of FIG. 4) and subsequent training of neural network 210 using training set 234 to generate trained parameters 212 is skipped. Accordingly, the traditional approach, where pretrained networks are used as starting point during training and then fine-tuned to improve performance for a specific scenario, is skipped and the generalization capability of neural network 210 is preserved. No effort is used preparing training data and for initial training of neural network 210. Neural network 210 thereby operates using the pretrained parameters, which still demonstrates robust feature extraction from 2D depth-map image 214.

This approach is chosen to address the inherent complexity found in multi-dimensional feature maps and leads to greater transparency of operation, facilitating more effective human analysis and troubleshooting, and also results in improved system performance and accuracy, better targeting resource-constrained environments and real-time applications. This dual benefit represents a significant step forward, particularly in the realm of AI models, where the ability to understand, interpret, and refine behavior of the neural network is crucial.

### Neural Network Model and Phases

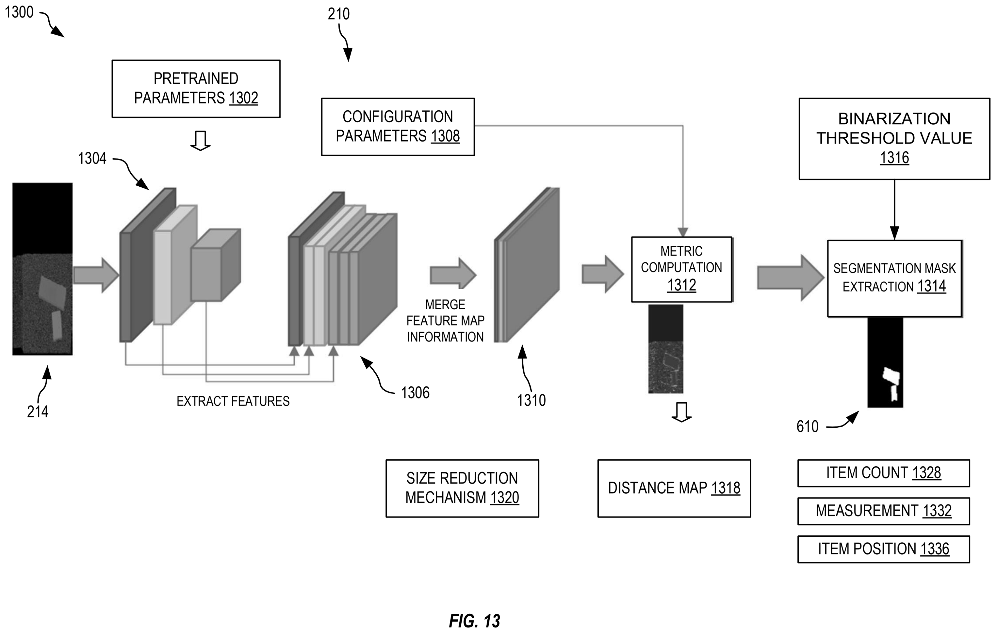

FIG. 13 is a schematic diagram of one example system 1300 with neural network 210 of FIG. 2 operating with pretrained parameters 1302 and illustrating example components and resulting flow of information when processing 2D depth-map image 214 to extract features, in embodiments. System 1300 is similar to system 100, but skips the training to fine-tune neural network 210 to generate trained parameters 212. System 1300 uses an alternative approach for configuring system 1300 to implement detection and segmentation 124 to allow subsequent metric computation 1312 (e.g., generation of an item count 1328, 3D measurements 1332, and an item position 1336) and segmentation mask extraction 1314 (e.g., generation of segmentation mask 610).

Pretrained parameters 1302 configure neural network 210 with many different types of layers 1304 that provide the most generalized feature extraction of components, shown as feature maps 1306, at different resolution scales. This approach preserves the integrity of the neural network parameters (e.g., pretrained parameters 1302), ensuring that they remain unaltered throughout use of neural network 210. The preservation of neural network parameters is essential for this approach, allowing for adaptability to a spectrum of industrial contexts without necessitating costly and time-consuming retraining. However, the specialization of different industrial environment requires an alternative approach to training and inference phases of neural network 210 of FIGs. 2-6.

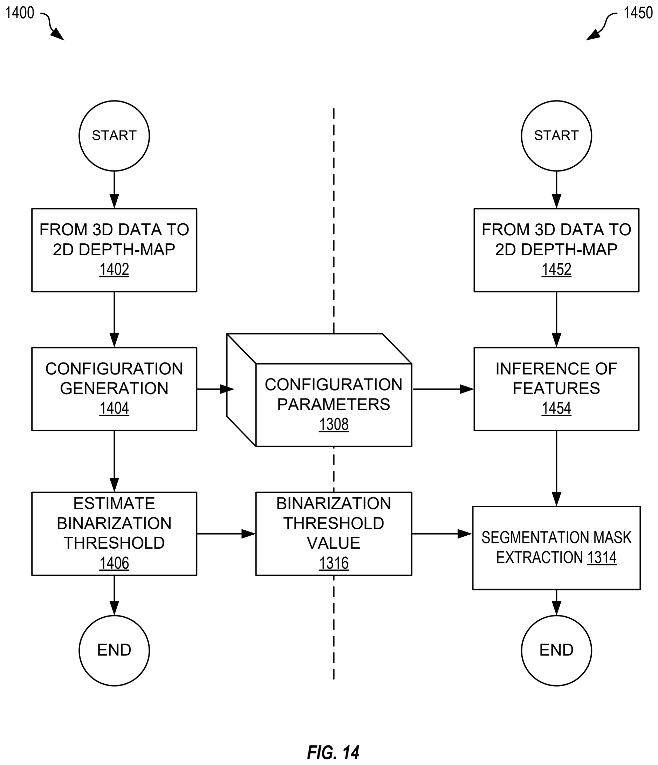

FIG. 14 is a flowchart illustrating linkage between a training phase 1400 and an inference phase 1450 of system 1300 of FIG. 13, in embodiments. In training phase 1400, configuration generation 1404 generates configuration parameters 1308 and estimate binarization threshold 1406 generates a binarization threshold value 1316. Configuration parameters 1308 and binarization threshold value 1316 are used by inference phase 1450 as shown. FIGs. 13 and 14 are described together in the following description. In blocks 1402 and 1452, as described above, 3D-data 216 is processed and converted into 2D depth-map image 214. Processing of 3D-data by neural network 210 typically requires significantly more computational power compared to processing 2D images, making processing of 3D-data 216 inhibiting for deployment in resource-constrained environments or real-time applications such as embedded computers. Particularly, spatially sparse 3D coordinates of 3D-data 216 are converted into a unified 2D continuous space of 2D depth-map image 214, which significantly reduces the computational load and memory required.

### Training Phase

Although conventional training of neural network 210 is not performed, to make the output of neural network 210 useful, neural network 210 is configured to generated the desired information for subsequent processing. For example, training phase 1400 includes configuration generation 1404 that generates configuration parameters 1308 that encapsulates information required for object discrimination and includes estimate binarization threshold 1406 that generates binarization threshold value 1316 that is used for segmentation during inference phase 1450.

Configuration generation 1404 executes strategies aimed at acquiring and proficiently handling pertinent information (e.g., ones of feature maps 1306 that provide relevant information), with a particular focus on subsequent generation of a distance map 1318. The strategies for generating configuration parameters 1308 include: a reduction of feature maps, a policy for training parameter updating, and dynamic criterion for binarization threshold estimation.

The reduction of feature maps strategy is an efficient technique that optimizes and manages feature maps 1306, ensuring that relevant information 1310 is retained for further analysis. The policy for training parameter updating strategy facilitates the periodic adjustment of configuration parameters 1308. This policy ensures adaptability of system 1300 to evolving data and changing scenarios. By periodically updating configuration parameters 1308, system 1300 remains dynamic and responsive, such as when a new empty belt is provided, thereby enhancing its overall robustness and accuracy. This adaptability ensures the continued performance of system 1300 and the preservation of a high level of accuracy, even with evolving hardware conditions and/or damage to the belt conveyor. The dynamic criterion for binarization threshold estimation strategy is an automatic process that estimates a binarization threshold value 1316 and thereby eliminating the need for manual threshold setting and enhancing the usability and versatility of system 1300. Dynamic criterion for binarization threshold estimation is described in further detail below.

These strategies use a specialized distance metric (e.g., the Mahalanobis distance as known in the art), to compute distance map 1318 that emphasizes disparities in the positioning of multi-dimensional features concerning the empty belt conveyor features. Although the Mahalanobis distance is used in the following example, other distance metrics may be used without departing from the scope hereof. The specialized distance metric is selected for its inherent effectiveness in assessing dissimilarity or proximity among features within a multi-dimensional space.

The disclosed strategies leverage the specialized distance metric to capture latent patterns, identify outliers, and to facilitate informed decision-making processes. For example, the specialized distance metric may be used to determine whether 2D depth-map image 214 is normal (e.g., does not include an object on cross-belt conveyor 104) or anomalous (e.g., does include an object on cross-belt conveyor 104). Consequently, the disclosed approach significantly amplifies the analytical capabilities of system 1300.

### Inference Phase

In inference phase 1450, inference of features 1454 generates relevant information 1310 from feature maps 1306 using configuration parameters 1308 and segmentation mask extraction 1314 uses binarization threshold value 1316 to generate segmentation mask 610, where binarization threshold value 1316 is used as a distance metric. Subsequently, segmentation mask 610 may be filtered via a post-processing mechanism.

### Data categorization

Training phase 1400 and inference phase 1450 do not necessitate annotation of 2D depth-map image 214; however, 2D depth-map image 214 may be categorized into one of two classes: normal data and anomalous data. Where 2D depth-map image 214 is classed as normal data, 2D depth-map image 214 represents cross-belt conveyor 104 without any items thereon. 2D depth-map images 214 classed as normal data may be used during configuration generation 1404 of training phase 1400 to provide a baseline representation of cross-belt conveyor 104 in an object-free state. 2D depth-map images 214 classed as anomalous data represent cross-belt conveyor 104 with at least one item 102 positioned thereon (e.g., positioned across one or more industrial cross-belt cells). 2D depth-map image 214 classed as anomalous data are processed by inference of features 1454 during inference phase 1450 and result in generation of one or more segmentation masks 610. 2D depth-map images 214 classed as anomaly data enable system 1300 to identify and isolate objects within the conveyor environment.

Inference of features 1454 may automatically classify 2D depth-map image 214 as one of normal data and anomalous data to distinguish between typical operational conditions (e.g., no items on cross-belt conveyor 104) and anomalous conditions where items are present on cross-belt conveyor 104 and exit from a valid zone for example, and thus require segmentation and analysis.

Training phase 1400 only uses 2D depth-map image 214 classed as normal data, thereby eliminating the need for human intervention or data categorization.

### Reduction of Feature Maps

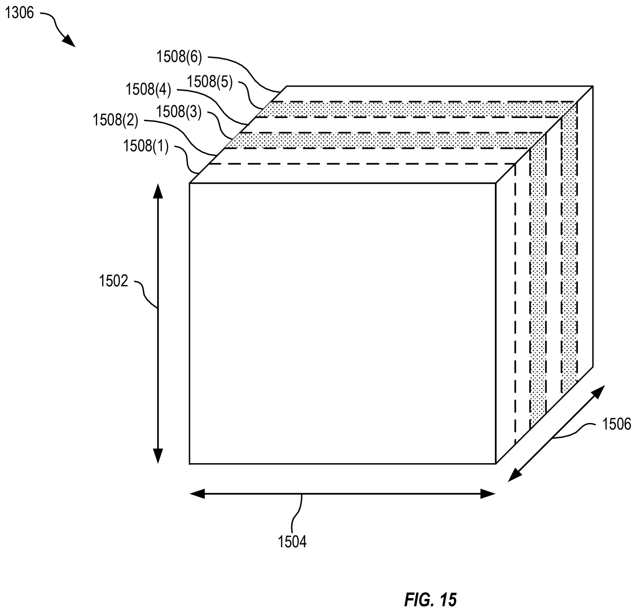

Even when processing 2D depth-map image 214, neural network 210 may generate feature maps 1306 with high dimensionality. FIG. 15 is a schematic diagram illustrating a multi-dimensional structure of one example feature map 1306 of FIG. 13, in embodiments. Feature map 1306 has a height 1502, a width 1504, and a depth 1506. Height 1502 and width 1504 may be based on an input to , Depth 1506 may correspond to a number of filters used in a convolutional layer that generates feature map 1306, where each filter is applied to detect a particular feature of 2D depth-map image 214. Height 1502 and width 1504 may correspond to dimensionality of 2D depth-map image 214. In this example, two channels 1508(3) and 1508(5) of feature map 1306 are highlighted to represent useful and valuable information relevant to generating segmentation mask 610, for example. Since neural network 210 may implement many layers and filters, feature maps 1306 may require significant computational resources, which present inherent challenges for resource-constrained embedded computers.

To streamlining the analysis process of neural network 210 for enhanced efficiency, a size reduction mechanism 1320 isolates and extracts the most useful and valuable information (e.g., certain channels 1508) from feature maps 1306.

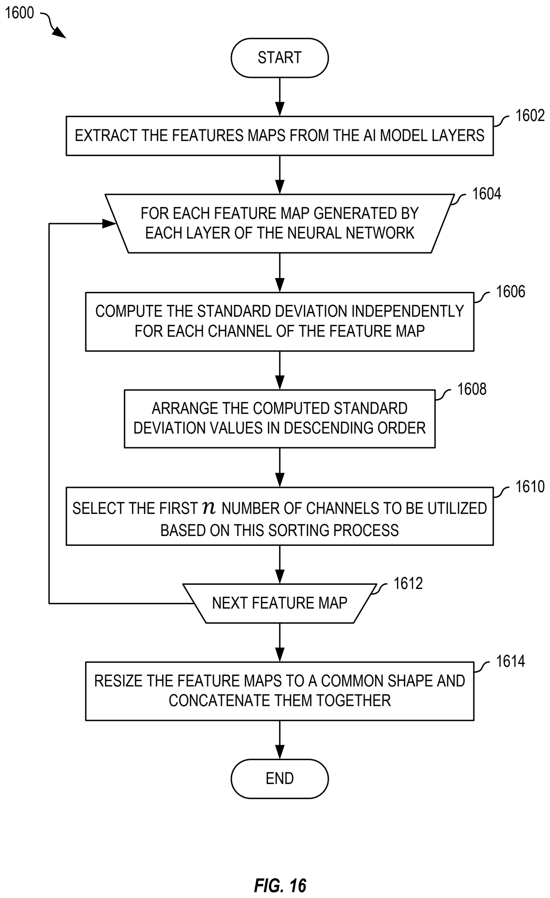

FIG. 16 is a flowchart illustrating one example method 1600 for isolating and extracting the most useful and valuable information from feature maps 1306 of FIG. 13, in embodiments. Method 1600 is implemented by size reduction mechanism 1320 of FIG. 13, for example. Size reduction mechanism 1320 invokes method 1600 during configuration generation 1404 of training phase 1400, while subsequent feature maps 1306 are filtered by the designated channels. Feature maps produced by neural networks may have high dimensionality. For example, feature maps of a convolutional neural network have dimensions Width, Height, and Depth. The term "high dimensionality" refers to an higher element along the Depth dimension. In particular, when the Depth dimension is very high (e.g., more than 100 or 1000), it is important to discard dimensions that are not particularly relevant to the defined task. To reduce the Depth dimension of the feature maps, the standard deviations are calculated for each element along the Depth, and the first N indices on depth dimension that have a higher standard deviation value are selected. These indices are then stored in the configuration parameters and used in both the training and inference phases.

In block 1602, method 1600 extracts the features maps from the AI model layers. In one example of block 1602, size reduction mechanism 1320 extracts feature maps 1306 from neural network 210. Block 1604 is the start of a loop that repeats for each feature map generated by each layer of the neural network. Blocks 1604 through 1612 repeat for each feature map generated by each layer of neural network 210.

In block 1606, method 1600 computes the standard deviation independently for each channel of the feature map. In one example of block 1606, size reduction mechanism 1320 computes a standard deviation independently for each channel 1508 of feature map 1306.

In block 1608, method 1600 arranges the computed standard deviation values in descending order. In one example of block 1608, size reduction mechanism 1320 arranges the standard deviation values in descending order. In block 1610, method 1600 selects a first n channels to be used based on the sorted standard deviation values. In one example of block 1610, where n is two, size reduction mechanism 1320 selects channels 1508(3) and 1508(5) corresponding to the two largest standard deviation values of feature map 1306. The value of n may be selected based on determined performance of system 1300.

Block 1612 is the end of the loop and method 1600 repeats blocks 1606 through 1610 for a next feature map. Method 1600 continues with block 1614 when all feature maps have been processed.

In block 1614, method 1600 resizes the feature maps to a common shape and concatenates them together. In one example of block 1614, size reduction mechanism 1320 resizes channels 1508(3) and 1508(5) to a standard size and concatenates them with other resized channels of other feature maps 1306.

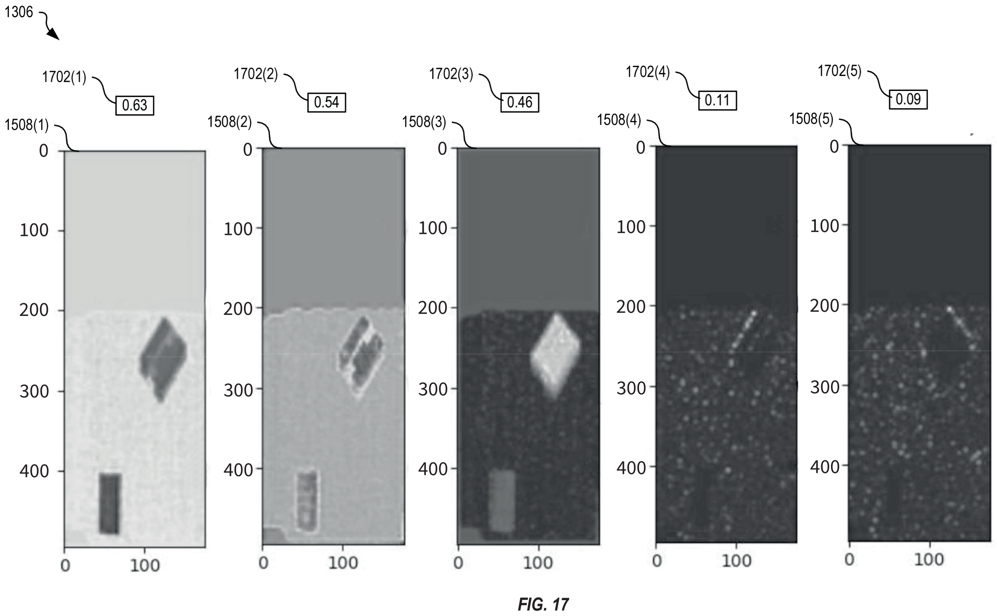

FIG. 17 is a schematic diagram showing five images of example channels 1508(1)-1508(5) of feature map 1306 of FIG. 13 and corresponding standard deviation values 1702(1)-1702(5), respectively, in embodiments. Each standard deviation value 1702 is determined independently for each channel 1508, and is greater where channel 1508 contains greater semantic structures corresponding to items 102 positioned on cross-belt conveyor 104. In FIG. 17, channels 1508 are shown sorted, from left to right, based on ordering of standard deviation values 1702 from highest to lowest. For example, where n is three, size reduction mechanism 1320 selects channels 1508(1)-1508(3) for further processing of feature map 1306, where these channels have the most substantial information content.

### Policy for Training Parameter Updating

As noted above, a specialized distance metric is used to determine whether 2D depth-map image 214 divide regions between anomalous and normal. In the described embodiments, the *Mahalanobis* distance is used as an example of the specialized distance metric. However, other specialized distance metrics may be used without departing from the scope hereof. The *Mahalanobis* distance requires two main components: a covariance matrix, denoted with Σ, and a mean vector, denoted with *µ*. To simplify the following description, the covariance matrix and mean vector are collectively referred to as "trained parameters". These trained parameters include a substantial number of stored samples and use simultaneous computation to yield desirable results. Therefore, an update algorithm is used to minimize memory usage. These trained parameters are stored in configuration parameters 1308 of FIG. 13, for example. Configuration parameters 1308 may include: Mean Vector, Covariance Matrix, Binarization Threshold, and Feature maps indices.

The Mahalanobis distance is defined as follows: $mahalanobis = \sqrt{{\left(X-μ\right)}^{T} {Σ}^{- 1} \left(X-μ\right)}$ where Σ⁻¹ represents the inverse of covariance matrix and *µ* represents the mean vector.

The update algorithm is used only during training phase 1400 and is formed of two parts that are implemented (a) at a setup time for a first iteration, and (b) after the first iteration and for each new sample. At the setup time for the first iteration, the update algorithm (i) saves *n* samples during the training and then computes and selects feature maps 1306 from neural network 210, and (ii) computes the covariance matrix and mean vector for all samples stored. After the first iteration, and for each new sample, the update algorithm (i) computes and selects feature maps 1306, and then (ii) updates the mean vector and covariance matrix as shown in equations (7) and (8): ${μ}_{t + 1} = {μ}_{t} + \frac{1}{t + 1} \left({x}_{t + 1}-{μ}_{t}\right)$ where *µ*_{*t*+1} is the updated mean vector, *x*_{*t*+1} is the updated samples, and *µₜ* is the mean vector computed at the setup time. ${\sum }_{t + 1} = \left({x}_{t}-{μ}_{t}\right) {\left({x}_{t}-{μ}_{t}\right)}^{T} \frac{t}{{\left(t+1\right)}^{2}} + \frac{t}{t + 1} {Σ}_{t}$ where Σₜ is the multivariate covariance matrix and *µₜ* is the mean vector computed at the setup time.

The use of the update algorithm provides the distinct advantages of: temporal invariance, lossless covariance matrix update, and efficient memory utilization. The temporal invariance advantage is provided by maintaining consistency in the construction of the covariance matrix and mean vector irrespective of the temporal order of updates. This temporal invariance ensures that the covariance matrix and mean vector estimations remain unchanged, enhancing the algorithm's robustness in handling data with varying sequences. Furthermore, this advantage allows system 1300 to continuously update trained parameters using new 2D depth-map images 214 of an empty cross-belt conveyor 104. The lossless covariance matrix update advantage is provided when integrating new samples, because the update algorithm achieves a lossless update of the covariance matrix. This capability preserves valuable information and accuracy during ongoing parameter estimation, contributing to the algorithm's reliability. The efficient memory utilization advantage is provided because the update algorithm demonstrates efficiency in memory usage during the estimation of trained parameters. This efficiency is particularly valuable in resource-constrained environments, where minimizing memory requirements is essential for optimal performance.

### Dynamic Criterion for Binarization Threshold Estimation

One aspect of the present embodiments includes the realization that distance metrics, such as the Mahalanobis distance, have potential variability in the values they produce. Frequently, this variability manifests as an undefined range, primarily because all conceivable values are theoretically valid within the context of the metric. In the context of *Mahalanobis* distance, the domain of possible values is confined to the interval [0, +∞], signifying a non-negative, unbounded scale. Nevertheless, it is important to note that there lacks a universally applicable threshold value that definitively demarcates anomalous from normal observations within distinct industrial settings.

The present embodiments solve this problem by introducing an automatic dynamic criterion to estimate this threshold value, which is applied only in the training phase to estimate a threshold value that allows size reduction mechanism 1320 to determine whether 2D depth-map image 214 is anomalous. The automatic dynamic criterion works as follow. When the trained parameters are provided (e.g., by size reduction mechanism 1320), the Mahalanobis distance is used on a set of samples stored in a temporary memory (e.g., named as "remember set"). When the set of samples is complete in memory, the Mahalanobis distance is computed for each sample in the set. For each Mahalanobis distance computed, the maximum value that represents the maximum error between the trained parameters and the current sample is stored. Binarization threshold 1406 is determined as a specific percentile of the maximum distance values computed.

Prototype experimentation indicates that setting binarization threshold 1406 to the 99^{th} percentile of the maximum distance values is inherently conservative in nature, particularly regarding demarcating the boundaries of the segmented object. This percentile also provides for heightened precision and robustness in the delineation process. Further, the 99^{th} percentile also prioritizes retention of pixels that are closer to the core characteristics of item 102. This approach aligns with a goal of achieving a more reliable and reproducible segmentation results, which is an essential aspect of image processing and object delineation in various environments.

Binarization threshold value 1316 is used by segmentation mask extraction 1314 of inference phase 1450 to generate segmentation mask 610, which highlights regions corresponding to items 102 on cross-belt conveyor 104. To refine and smooth the boundaries of items 102, reducing spurious structures, and enhancing the coherence of items 102 in segmentation mask 610, a morphological opening post-processing is applied. The morphological opening post-processing contributes to the overall fidelity of segmentation mask 610, ensuring that the delineated object in segmentation mask 610 accurately corresponds to the true boundaries of items 102 in 2D depth-map image 214. Thus, the combined use of the 99^{th} percentile as binarization threshold 1406 and the use of the morphological opening post-processing creates a comprehensive solution for achieving precise, noise-resistant object segmentation.

The instance segmentation model 804 of FIG. 8 (and associated method 900 of FIG. 9 and examples of FIG. 10-12) may also be used with system 1300 of FIG. 13 for differentiating and isolating individual item instances within 2D depth-map image 214 of FIG. 2.

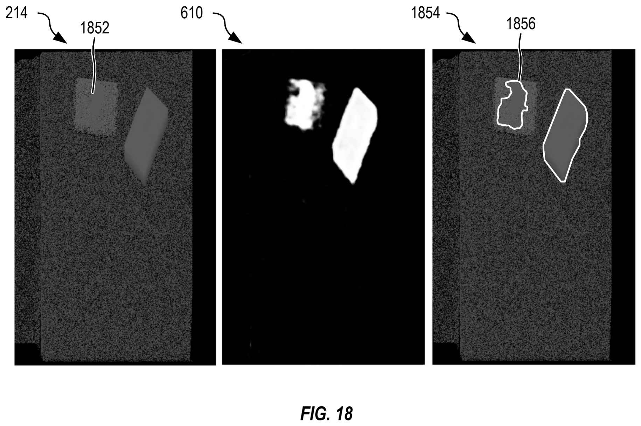

FIG. 18 shows one example 2D depth-map image 214 of a noisy thin parcel 1852, a corresponding segmentation mask 610, and resulting contour overlay 1854 with a detected contour 1856, in embodiments. Noisy items were shown to decrease by only few percentage points in accuracy of the detection metric measured pixel-wise, but the detection of the item is still considered valid even with a negligible decrease of confidence around the item borders.

In certain embodiments, models of neural network 210 are designed and trained using TensorFlow scripts in Python. To integrate these trained models in embedded devices, the models are deployed by loading their weights using C++ code to run on both the CPU and the integrated GPU, when available, of the computing device.

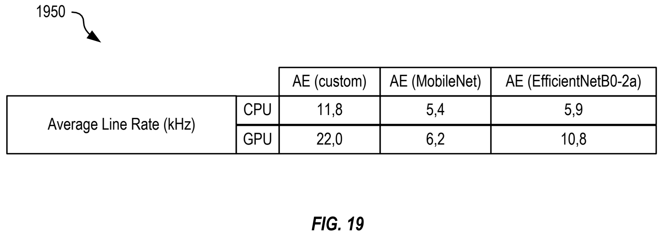

FIG. 19 is a table 1950 showing an average line rate, derived from the average inference time of the system, which is more intuitive, given that 3D sensors 114, as well as other linear cameras that may be used to sense items 102 on cross-belt conveyor 104, collect 3D-data 216 by progressively scanning and capturing a single line of information at a time. The average line rate measured in kHz (e.g., 103 lines/s) represents how many scan lines from 3D sensors 114 could be processed in one second.

### Model Generalization on Different Datasets

Another key achievement that gives system 100 extreme flexibility, is that generalization tests indicate that cross-dataset training and inference is possible, with no significant decrease in performance. A generalization test is performed by training a model on a different dataset with respect to the scenario that the model is deployed for. For example, using empty data 232 from a traditional conveyor belt and then deploying system 100 for us with a cross belt conveyor, no significant decrease in performance was observed (e.g., median IoU accuracy remained above 90%), even when the background was different.

Accordingly, system 100 may be trained using a single training set 234, and then deployed to a customer's environment where it may be decided whether to use the model as is or to perform some fine-tuning using a small dataset of 2D depth-map images 214 captured at the customer's environment using their conveyor running without carrying items.

### Ablation studies

Ablations studies were performed to investigate how the certain components contribute to the overall performance and stability of system 100. Training stability was evaluated by determining a minimum number of backgrounds (K) and a minimum number of samples (N) that could be used to train system 100 (e.g., all models) without losing IoU accuracy. The minimum number of background images in empty data 232 used to train system 100 while median IoU accuracy remained above 90% was K = 10. The minimum number of training samples, generated by replicating K background images and generating items 102 on top, to train system 100 while median IoU accuracy remained above 90% was N = n_replica * K = 100 training samples.

### Z-Threshold

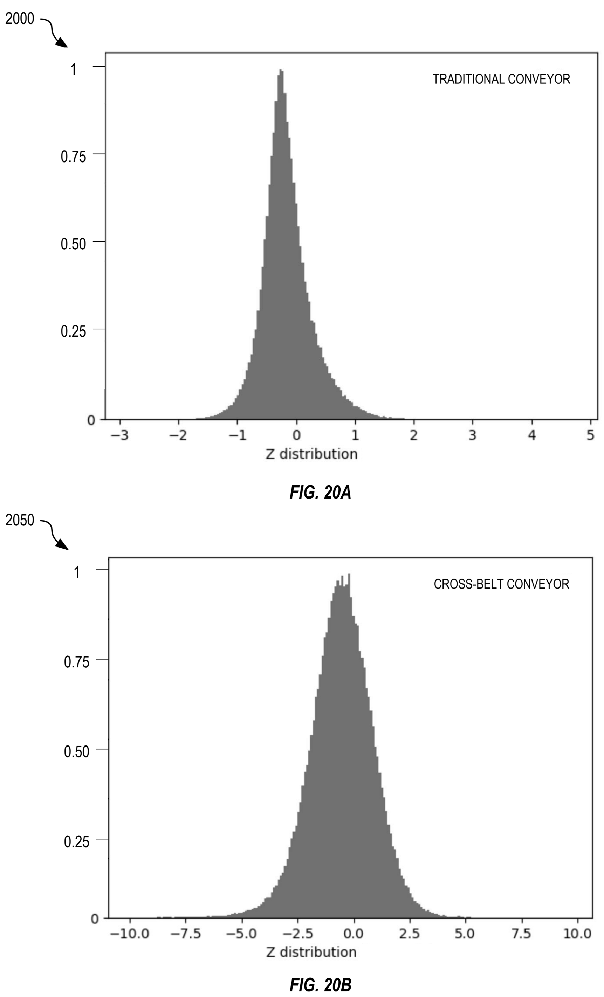

FIGs. 20A and 20B are graphs 2000 and 2050 showing sample distributions of empty data 232 in inches for a traditional conveyor and a cross-belt conveyor, respectively. A Z-threshold defines a minimum value of 3D-data 216 that is converted into 2D depth-map image 214. Traditionally, the Z-threshold is chosen manually (e.g., by expert configurators/installers), and used to discard false positive detections due to background noise fluctuations in 2D depth-map image 214 (e.g., from 3D-data 216).

However, a min Z-threshold may be automatically determined by an algorithm that calculates the min Z-threshold as the *N*^{th} percentile of distribution, where *N* is the desired percentage of invalid pixels in the resulting depth-map background. Alternatively, instead of determining an *N*^{th} percentile of distribution, the algorithms may assume the shape of the Z-values distribution is gaussian and then select the threshold as *µ*-*nσ* (where *µ* is the data mean, *σ* is the data standard deviation, and n is selected manually).

Using graphs 2000 and 2050 and selecting N=35^{th} percentile as a threshold, the algorithm determines an auto Z-threshold = -0.32 inches for the traditional conveyor (graph 2400) and auto Z-threshold = -0.94 inches for the cross-belt conveyor (graph 2050). The per-pixel IoU accuracy of system 100 was evaluated using all available traditional conveyor and cross belt conveyor datasets for varying Z-threshold values.

Changes may be made in the above methods and systems without departing from the scope hereof. It should thus be noted that the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall therebetween.

## Claims

1. A method for depth-map based detection of items on a conveyor belt using self-supervised neural network models, comprising:
receiving 2D depth-map images of the conveyor belt when empty;
generating a training set of labelled 2D depth-map images based on the 2D depth-map images; and
training the neural network using the training set to form trained parameters.

2. The method of claim 1, further comprising:
capturing 3D data from at least one 3D sensor positioned at the conveyor belt when empty; and
converting the 3D data to form the 2D depth-map images.

3. The method of claim 1 or 2, the generating the training set further comprising:
for each training sample of the training set:
selecting one 2D depth-map image of the conveyor belt;
generating a global label mask of black pixels having a size and a shape of the one 2D depth-map image;
determining a number of items to generate, the determining a number of items to generate preferably comprising generating a random integer value in a range starting from zero;
for each item to generate:
determining characteristics for the item, the characteristics including an item length, an item width, an item average height, an item rotation, and an item position;
generating a binary item mask defining the item in white pixels based on the characteristics;
determining a random height noise;
copying the binary item mask; and
replacing each of the white pixels with a simulated height value based on the average height and the height noise to form an item mask;
pasting the item masks onto the 2D depth-map image; and
pasting the binary item masks onto the global label mask.

4. The method of claim 3, further comprising, after said replacing for each item, generating, for a surface of the item, randomly sized and randomly positioned circles filled with different simulated height values based on different average height and different height noise.

5. The method of claim 3 or 4, the determining the random height noise defining a maximum amount of noise to be applied randomly to the average height when replacing the white pixels of the copied binary item mask.

6. The method of any of claims 1-5, further comprising:
capturing 3D data during operation of the conveyor belt to transport items;
converting the 3D data to a 2D depth-map image;
processing the 2D depth-map image using the neural network and trained parameters;
and
generating at least one of an item count, an item position, and 3D measurements of the item.

7. A method for instance segmentation of items on a conveyor belt, comprising:
receiving a 2D depth-map image of at least one item on the conveyor belt;
generating a segmentation mask from the 2D depth-map image;
generating an isolated 2D depth-map image from the 2D depth-map image and the segmentation mask;
predicting, using a pretrained image segmentation model, at least one instance segmentation mask;
filtering out redundant ones of the at least one instance segmentation mask; and
validating remaining ones of the at least one instance segmentation masks.

8. The method of claim 7, wherein the isolated 2D depth-map image isolates relevant portions of the 2D depth-map image for further processing.

9. The method of claim 7 or 8, said generating the segmentation mask comprising processing the 2D depth-map image through a neural network trained to generate the segmentation mask, wherein preferably said neural network is not specifically trained using images of the conveyor belt.

10. The method of any of claims 7-9, further comprising:
capturing 3D data from at least one 3D sensor positioned at the conveyor belt; and
processing the 3D data to form the 2D depth-map image.

11. A method for depth-map based detection of items on a conveyor belt using unsupervised anomaly detection models, comprising:
receiving 3D data of at least one item being transported by the conveyor belt;
converting the 3D data into a 2D depth-map image;
in a training phase:
processing the 2D depth-map image through extraction layers of a pre-trained neural network to generate a plurality of training feature maps;
generating configuration parameters that define selection and merging of ones of the training feature maps for further processing; and
determining a binarization threshold using a dynamic criterion;
in an inference phase:
processing the 2D depth-map image through extraction layers of a pre-trained neural network to generate a plurality of inference feature maps;
selecting and merging ones of the plurality of inference feature maps based on the configuration parameters to form relevant information; and
generating a segmentation mask from the relevant information based on the binarization threshold.

12. The method of claim 11, the dynamic criterion comprising:
computing, using a specialized distance metric, a distance value for each sample of a set of samples, the specialized distance metric preferably comprising a Mahalanobis distance;
determining a maximum value of the distance values; and
determining the binarization threshold as a predefined percentile of the maximum value, the predefined percentile being preferably a 99^{th} percentile.

13. The method of any of claims 11-12, said generating configuration parameters comprising:
for each feature map of the plurality of training feature maps:
computing a standard deviation value independently for each channel of the feature map; and
selecting a first n channels of the feature map with highest ones of the standard deviation values;
resizing the selected channels of each of the feature maps to have a common size and shape; and
concatenating the resized channels together to form the relevant information.

14. The method of any of claims 11-13, wherein the configuration parameters define information required for object discrimination and segmentation during the inference phase; and optionally updating the configuration parameters in response to changes in an operational environment.

15. The method of claim any of claims 11-14, further comprising repeating actions of the training phase to update the binarization threshold.
